# EUROPÄISCHE PATENTSCHRIFT

(11) **EP 1 470 912 B1**
(45) Veröffentlichungstag und Bekanntmachung des Hinweises auf die Patenterteilung: **16.11.2005**
(21) Anmeldenummer: 04004184.0
(22) Anmeldetag: 25.02.2004
(51) Int. Cl.: B32B 18/00, B32B 5/24, H01Q 1/42, C04B 35/80, B64G 1/58

(54) **Mehrschichtiges keramisches Verbundmaterial mit thermischer Schutzwirkung**
Multilayered ceramic coposite material having thermal protection properties
Matériau composite multicouche en céramique ayant des propriétés thermiques de protection

(30) Priorität: 24.04.2003 DE 10318514
(43) Veröffentlichungstag der Anmeldung: 27.10.2004
(73) Patentinhaber: EADS Deutschland GmbH, 85521 Ottobrunn (DE)
(72) Erfinder: Simon, Reinhard A., 2880 St. Corona am Wechsel (AT); Knabe, Helmut E.A., 88048 Friedrichshafen (DE); Schäfer, Wolfgang, Dr., 88048 Friedrichshafen (DE); Vogel, Walter D., Dr., 88682 Salem (DE); Wulbrand, Wilhelm, Dr., 88677 Markdorf (DE); Hager, Wilhelm, Dr., 88483 Burgrieden (DE); Lindner, Kurt, 89075 Ulm (DE); Hennig, Paul, Dr., 85521 Ottobrunn (DE)
(74) Vertreter: Meel, Thomas

(56) Entgegenhaltungen:
- WO-A-94/02429
- AU-B- 605 179
- US-A- 5 188 780
- US-A- 5 441 682
- US-B1- 6 497 390
- KELLER K ET AL: "HIGH-TEMPERATURE INSULATIONS" ESA BULLETIN, ESA SCIENTIFIC AND PUBLICATIONS BRANCH. NOORDWIJK, NL, Nr. 80, 1. November 1994 (1994-11-01), Seiten 50-56, XP000481034 ISSN: 0376-4265
- VALLAR S ET AL: "Oxide slurries stability and powders dispersion: optimization with zeta potential and rheological measurements" JOURNAL OF THE EUROPEAN CERAMIC SOCIETY, ELSEVIER SCIENCE PUBLISHERS, BARKING, ESSEX, GB, Bd. 19, Nr. 6-7, Juni 1999 (1999-06), Seiten 1017-1021, XP004166022 ISSN: 0955-2219
- FLYATE D M: "EFFECT OF THE ZETA POTENTIAL ON PAPER MANUFACTURING PROCESSES" ABSTRACT BULLETIN OF THE INSTITUTE OF PAPER CHEMISTRY, THE INSTITUTE OF PAPER CHEMISTRY-LIBRARY. APPLETON, US, Bd. 59, Nr. 2, 1. August 1988 (1988-08-01), Seite 190, XP000030726

## Beschreibung

Die Erfindung betrifft ein mehrschichtiges keramisches Verbundmaterial mit thermischer Schutzwirkung. Derartige Verbundmaterialien eignen sich insbesondere als Thermalschutz von Raumfahrzeugen oder Flugkörpern, die sich durch aerodynamische Erwärmung aufheizen, wobei das Verbundmaterial sowohl lasstragende, strukturelle Aufgaben übernimmt, als auch gleichzeitig als dielektrisches Fenster (Radom) dient.

Während des Aufstiegs und während des Eintritts in die Atmosphäre von Himmelskörpern, d.h. sowohl beim Wiedereintritt in die Erdatmosphäre als auch beim Eintritt in die Atmosphäre von Planeten und Monden sind Raumfahrzeuge extremen aerodynamischen, aerothermischen, mechanischen wie akustischen Belastungen ausgesetzt. Während dieser sehr wichtigen Phase des Fluges müssen die Raumfahrzeuge mit einem effektiven Thermalschutz versehen sein, der den vielfältigen mechanischen, thermischen und thermomechanischen Belastungen standhält. Bei wiederverwendbaren Raumtransportern wie dem amerikanischen Spaceshuttle, dem russischen Buran oder den zukünftigen japanischen Raumgleiter Hope werden als Thermalschutz an den heißen Stellen wie der Unterseite, dem Nasenbereich und den Flügelvorderkanten keramische Kacheln oder Schindeln vorgesehen.

Zukünftige Flugkörper werden mit extremen Geschwindigkeiten radargesteuert in Richtung ihres Zieles bewegt, wobei neueste Entwicklungen mit mehr als der 6-fachen Schallgeschwindigkeit fliegen. Auf Grund der aerodynamischen Erwärmung treten an der Spitze derartiger Flugkörper sehr hohe Temperaturen auf. Geeignete Thermalschutzsysteme müssen während des kurzen Fluges verhindern, dass die Wärme durch die Raketenspitze hindurchdringt und die dahinterliegenden Radargeräte in ihrer Funktion beeinträchtigt werden. Gleichzeitig müssen diese Thermalschutzsysteme (Radome) radartransparent bei den entsprechenden Frequenzen im GHz-Bereich sein und bei allen Flugbedingungen bleiben.

Dielektrische Fenster (Radome oder Antennenabdeckungen) dienen zum Schutz von Antennen an Fluggeräten (Flugkörpern) gegen Umwelteinflüsse. Radome müssen eine hohe Transparenz und geringen Verlust für Radarwellen im gesamten Betriebsfrequenzbereich besitzen. Sie müssen lagebedingte aerodynamische Kräfte aufnehmen können sowie eine hinreichend hohe Beständigkeit gegenüber durch aerodynamische Erwärmung auftretende Temperaturen besitzen. Sie müssen weiterhin in der Lage sein, die im Radom eingebrachten empfindlichen Antennen vor Wärme zu schützen.

Derzeitige Radome, welche für Raketen gebaut werden, die bei Geschwindigkeiten bis Mach 4 nur einen kurzen Flug überstehen müssen (0,5 bis 2 min), müssen sehr dünn sein, um bei den entsprechenden Frequenzen kleiner 18 GHz eingesetzt werden zu können. Derartige Radome bestehen meist aus glasfaserverstärktem Polyimid. Sie können auch aus zwei dünnen Schichten aus glasfaserverstärktem Polyimid bestehen, welche durch eine Glas-Polyimid-Honeycomb-Struktur getrennt sind (Sandwichaufbau). Der Nachteil derartiger Radome liegt in der Obergrenze der Einsatztemperatur von 650 bis 760°C.

Zukünftige Generationen von Flugkörpern werden wesentlich schneller (über Mach 6) und auch wesentlich länger fliegen. Die Konsequenz daraus ist, dass sich die Kunststoffmatrix der Radome sehr stark erwärmt (Spitzentemperaturen deutlich größer 1000°C) und unter Bildung von Kohlenstoff pyrolysiert. Dies verschlechtert die radaroptischen Eigenschaften dramatisch und die geforderten Transmissionseigenschaften sind nicht mehr erfüllt. Derartige Radome sind daher nicht für zukünftige Flugkörper geeignet.

### Stand der Technik - Radomwerkstoffe und Bauweisen

Aus US 5,738,750 ist ein Radom in Sandwichbauweise bekannt, welches aus einem keramischen Kern, bestehend aus einer Honigwabenstruktur (SiO₂, Al₂O₃ oder AlSiO₄ Fasern imprägniert mit Polysilicone und/oder Polysilazan) oder einem Schaum, und zwei Deckschichten aus einem mit einem anorganischen Harz imprägniertem Quarzglasgewebe besteht, wobei das anorganische Harz (ein Polysilikon und/oder ein Polysilazan) über einen Pyrolyseprozess teilweise in SiO₂ umgewandelt wird. Der Werkstoff ist im wesentlichen frei von elementarem Kohlenstoff. Durch die unvollständige Pyrolyse bei relativ niedrigen Temperaturen wird bei der Herstellung die Bildung von elementaren Kohlenstoff weitgehend verhindert. Dies bedeutet jedoch nicht, dass der Werkstoff frei von Kohlenstoff ist. Es ist bekannt, dass sich bei der Pyrolyse von anorganischen Harzen, wie Polysilikon und Polysilazan, eine glasartige SiOₓC_{y}-Phase (black glass) bildet, in die der Kohlenstoff eingelagert ist. Der Werkstoff gemäß US 5,738,750 weist darüber hinaus eine obere Einsatztemperaturgrenze in sauerstoffhaltiger Atmosphäre von etwa 1090°C auf, da sich bei diesen Temperaturen elementarer Kohlenstoff aus der SiOₓC_{y}-Phase ausscheidet, was zu einer deutlichen Verschlechterung der dielektrischen Eigenschaften führt.

### Stand der Technik - Herstellverfahren für oxidische Verbundwerkstoffe

Zur Herstellung endlosfaserverstärkter Keramiken sind Verfahren bekannt, die im wesentlichen in Gasphasenprozesse (CVI) oder Flüssigphasenprozesse (LMI, LPI, SIHP, Sol-Gel) unterteilt werden. CVI-Prozesse haben den Nachteil, dass sie sehr kostenintensiv und schwierig zu beherrschen sind. Zur Herstellung oxidischer, endlosfaserverstärkter Keramiken werden daher praktisch ausschließlich Flüssigphasenprozesse verwendet.

Bei dem LMI-Verfahren (Liquid Melt Infiltration) erfolgt der Matrixaufbau durch Infiltrierung einer Faservorform mit einer Metallschmelze und gleichzeitiger oder anschließender Oxidation. Als Nachteile sind hier die schwierige Prozeßführung, der Faserangriff durch die Metallschmelze und der Verbleib von Restmetall durch unvollständige Oxidation zu sehen.

Bei dem LPI-Verfahren (Liquid Polymer Infiltration) erfolgt der Matrixaufbau durch Infiltrierung von Faserhalbzeugen mit Suspensionen, die ein anorganisches Polymer enthalten, das in einer Pyrolyse vorrangig zu kovalent gebundenen, amorphen oder kristallinen Keramiken umgewandelt werden kann. Die Umwandlung zur Keramik ist mit großen Volumenschwindungen und damit Rissbildungen innerhalb der Matrix verbunden. Als Abhilfe werden passive oder aktive Füllstoffe verwendet, die durch Volumenexpansion vor oder während der Pyrolyse der Schwindung teilweise entgegenwirken. Ein Auffüllen des Rissnetzwerkes und eine Erhöhung der Matrixdichte erfolgt üblicherweise in mehrfachen Nachinfiltrationsschritten, die einen erheblichen Zeit- und Kostenaufwand darstellen. Aufgrund der Verwendung von anorganischen Polymeren (Precursoren) ist die Herstellung von oxidischen faserverstärkten Keramiken nur bedingt möglich, da die C-Atome des Precursors entweder in die abgeleitete amorphe oder kristalline Struktur der Keramik eingebunden sind, oder zusätzlich als elementare Kohlenstoff-Ausscheidungen vorliegen. Durch Hochtemperaturauslagerungen unter oxidativen Bedingungen kann der C-Anteil zwar gesenkt werden, dies ist aber mit einem beträchtlichen Zeit- und Kostenaufwand verbunden. Eine andere Möglichkeit besteht in der unvollständigen Pyrolyse des Precursors bei niedrigen Temperaturen mit dem Ziel möglichst wenig elementaren Kohlenstoff zu bilden. Das hat allerdings zur Folge, dass der Werkstoff im Hochtemperatur-Einsatz eine obere Zeit- und Temperaturgrenze aufweist, ab der sich der elementare Kohlenstoff durch weitere Pyrolyse bildet. Die Herstellung von rein oxidischen faserverstärkten Keramiken aus anorganischen Polymeren ist nach heutigem Stand der Technik immer mit C-Verunreinigungen verbunden. Dies ist für die Verwendung als Radomwerkstoff ein wesentlicher Nachteil, da bereits geringste Mengen von Kohlenstoff die dielektrischen Eigenschaften deutlich verschlechtern.

Bei dem SIHP-Verfahren (Slurry Impregnation and Hot Pressing) erfolgt der Matrixaufbau durch Infiltrierung von Faserhalbzeugen mit einer Suspension auf wässriger oder organischer Basis, die keramische Pulver, einen organischen Binder und weitere Hilfsstoffe enthält. Die Konsolidierung erfolgt durch Heißpressen oder heißisostatisches Pressen, was mit einem erheblichen anlagentechnischen Aufwand verbunden ist und auf Bauteile mit einfacher Geometrie beschränkt ist.

Bei dem Sol-Gel-Verfahren erfolgt die Infiltrierung von Faserhalbzeugen mit molekular- oder kolloiddispersen Solen. Der Übergang vom niedrigviskosen Sol zu einem hochviskosen Gel erfolgt durch Destabilisierung oder durch Hydrolyse und Polykondensationsreaktionen. Es können mit dieser Technik chemisch reine Oxide hergestellt werden. Das Trocknen und Sintern von Gelen ist jedoch mit sehr hohen Volumenschwindungen verbunden, was zu hoher Matrixporosität und Rissbildung führt und mehrfache Nachinfiltrations- und Sinterzyklen erforderlich macht, die mit einen erheblichen Zeit- und Kostenaufwand verbunden sind.

Bei dem EFD-Verfahren (Electrophoretic Filtration Deposition) erfolgt die Infiltrierung von Faserhalbzeugen mit kolloiddispersen Solen. Der Übergang zum Gel erfolgt durch elektrophoretische Abscheidung an einer Elektrode, wobei das zu infiltrierende Gewebe unmittelbar davor platziert ist. Es können zwar chemisch reine Oxide hergestellt werden, die hohe Trocknungsschwindung führt jedoch häufig zur Rissbildung. Die Herstellung von Laminaten und weitere Verdichtung der Matrix erfolgt in einem zusätzlichen Verfahrensschritt durch Filterpressen, was zu Dichtegradienten im Laminat führen kann und die Herstellung von komplizierten Bauteilgeometrien limitiert.

Aus der US 5,856,252 ist ein Verfahren bekannt, in dem die Infiltrierung von übereinander geschichteten Gewebelagen durch Filterpressen erfolgt. Es wird eine wässrige Suspension verwendet, die einen feinteiligen oxidkeramischen Feststoff enthält. Das Sintern erfolgt drucklos, wobei eine rein oxidische, poröse Matrix entsteht, die anschließend in mehreren Precursor-Nachinfiltrationsschritten und Sinterzyklen verstärkt wird. Der Nachteil des Verfahrens liegt einerseits in den erforderlichen Nachinfiltrationszyklen, was zu einem beträchtlichen Zeit- und Kostenaufwand führt und in der Verfahrenstechnik des Filterpressens, was zu Dichtegradienten im Laminat führen kann und die Herstellung von komplizierten Bauteilgeometrien limitiert.

Es ist ein weiteres Verfahren (WHIPOX) bekannt, in dem Faserbündel mit einer wässrigen Suspension, die Mullit-Vorstufenpulver, einen temporären Binder und weitere organische Hilfsstoffe enthält, infiltriert werden. Die Faserbündel werden in einem Wickelverfahren zu Rotationskörpern oder Prepregs abgelegt, die im nassen Zustand zu Laminaten weiterverarbeitet werden. Nach dem thermischen Entbindern und drucklosen Sintern entsteht eine rein oxidische Matrix mit hoher Porosität (60-80%). Nachteile dieses Verfahrens sind durch die Wickeltechnik und die hohe Matrixporosität bedingt. Es können ausschließlich Laminate aufgebaut werden, die aus unidirektional verstärkten Schichten aufgebaut sind. Dies führt zusammen mit der hohen Matrixporosität zu sehr niedrigen off-axis Festigkeiten, wie interlaminare Schubfestigkeit, intralaminare Schubfestigkeit oder transversale Zugfestigkeit. Eine Verbesserung dieser Eigenschaften durch Verwendung von dreidimensionalen Verstärkungsarchitekturen ist durch die Wickeltechnik nicht möglich. Einen weiteren Nachteil stellt die Verwendung eines temporären Binders und organischer Hilfsstoffe dar, die einen zusätzlichen Prozessschritt zur thermischen Entbinderung erforderlich machen.

### Stand der Technik - Herstellverfahren für monolithische Keramiken

Zur Fertigung monolithischer keramischer Grünkörper sind im wesentlichen fünf Formgebungsverfahren bekannt und zwar Pressen, Isopressen, Extrusion, Spritzguss und Schlickerguss. Zur Herstellung endlosfaserverstärkter Keramiken haben diese Verfahren keine Bedeutung, da sie nicht die notwendigen Anforderungen hinsichtlich einer faserschonenden, vollständigen und homogenen Infiltrierung der Faserzwischenräume mit Matrix erfüllen und auch keine wirtschaftliche Herstellung von großflächigen Leichtbaustrukturen mit komplizierter Geometrie ermöglichen. Lediglich Suspensionen, wie sie auch beim Schlickerguss Verwendung finden, wären prinzipiell für den Matrixaufbau geeignet. Die Verfestigung des Schlickers erfolgt durch Entzug des wässrigen Suspensionsmittels mittels poröser Gipsformen. Dieser Verfestigungsmechanismus durch Wasserentzug ist mit dem wesentlichen Nachteil verbunden, dass es zur Migration von feinen Teilchen und löslichen Bestandteilen kommt, was zu inhomogenen Gefügen mit Dichtegradienten führt. Die Gipsformen müssen nach jeder Verwendung getrocknet werden, was einen zusätzlichen Aufwand darstellt.

Die bekannten Nachteile des Schlickergusses werden durch das aus der CH 686 879 A5 bekannte Verfahren (DCC) teilweise überwunden. In diesem Verfahren wird eine wässrige, hoch feststoffhaltige Suspension nach dem Abgießen in eine nicht poröse Form durch Änderung der Oberflächenladung der Teilchen verfestigt. Die Koagulation durch Änderung des Oberflächenladungszustandes wird üblicherweise durch Substrat/Enzym-Reaktionen erreicht, die den pH-Wert in die Richtung des isoelektrischen Punktes verschieben oder die Ionenkonzentration erhöhen. Ein Nachteil des Verfahrens liegt in der Verwendung von Enzymen, die teuer sind und oft speziell gelagert werden müssen. Sie können in ihrer Wirksamkeit durch Wechselwirkungen mit Bestandteilen des Schlickers inhibiert werden, was die Suspensionsentwicklung deutlich erschwert. Da die Festigkeit von nassen Grünkörpern im allgemeinen überproportional mit dem Feststoffgehalt steigt, werden Suspensionen verwendet, die Feststoffgehalte zwischen 55 und 60 vol.% aufweisen. Ausreichende Grünfestigkeiten zur Entformung und weiteren Handhabung im nassen Zustand werden nur unter Verwendung dieser hohen Feststoffgehalte in der Suspension erreicht. Bezüglich einer eventuellen Verwendung zur Herstellung endlosfaserverstärkter Keramiken sind die sehr hohen Feststoffgehalte der Suspensionen problematisch, da durch die damit verbunden hohen Viskositäten eine homogene und vollständige Infiltrierung der Faserzwischenräume nicht möglich ist. Die relativ kurzen Verfestigungszeiten im Bereich zwischen 30 Minuten und 2 Stunden haben zur Folge, dass die Viskosität der Suspensionen schon nach wenigen Minuten stark ansteigt, was als Verarbeitungszeitraum für übliche Infiltrier- und Laminiertechniken viel zu kurz ist.

Ein weiteres Verfahren (HAS), das ebenfalls die bekannten Nachteile des Schlickergusses teilweise überwindet, ist aus der EP 0 813 508 B1 bekannt. In diesem Verfahren wird ebenfalls eine wässrige, hoch feststoffhaltige Suspension verwendet, der zum Zwecke der Verfestigung ein Metallnitridpulver zugegeben wird. Es werden ebenfalls nicht poröse Formen verwendet. Die Verfestigung erfolgt durch Erwärmen der Suspension über die Hydrolysetemperatur des Metallnitrides, die bei der vorrangigen Verwendung von Aluminiumnitrid bei Temperaturen zwischen 50°C und 70°C liegt. Durch die Hydrolyse wird der Suspension das Suspensionsmittel teilweise entzogen und fallweise zusätzlich der pH-Wert verschoben, was zu einem starken Anstieg der Viskosität führt. Einen Nachteil des Verfahrens stellt die notwendige Erwärmung der Suspension und damit verbunden der Einsatz von beheizten Formen dar. Da sich Temperaturprofile in der Suspension einstellen, ist auch mit einer inhomogenen Verfestigung und damit verbundenen Dichtegradienten zu rechnen. Wie bei dem zuvor genannten Verfahren ist die Verwendung sehr hoher Feststoffgehalte zwischen 50 und 60 vol.% in der Suspension erforderlich, um ausreichende Grünfestigkeiten für die Entformung und weitere Handhabung im nassen Zustand gewährleisten zu können. Bezüglich einer eventuellen Verwendung hinsichtlich der Herstellung endlosfaserverstärkter Keramiken ergeben sich aufgrund der hohen Feststoffgehalte die gleichen Probleme, da durch die damit verbunden hohen Viskositäten eine homogene und vollständigen Infiltrierung der Faserzwischenräume deutlich erschwert wird. Die Verfestigungszeiten sind darüber hinaus noch kürzer als bei dem zuvor genannten Verfahren, was als Verarbeitungszeitraum für übliche Infiltrier- und Laminiertechniken viel zu kurz ist.

Ausgehend von den bekannten Nachteilen bestehender oxidischer, endlosfaserverstärkter Keramiken liegt der Erfindung die Aufgabe zugrunde, ein Verbundmaterial zu entwickeln, welches sowohl den Anforderungen hinsichtlich Thermalschutzwirkung, Radartransparenz, und thermomechanischer Eigenschaften entspricht, als auch einfach und kostengünstig hergestellt werden kann. Die Aufgabe wird erfindungsgemäß mit dem Gegenstand des Patentanspruches 1 gelöst. Bevorzugte Ausführungsformen der Erfindung sowie bevorzugte Verwendungen sind Gegenstand weiterer Ansprüche.

Die Erfindung betrifft ein zweischichtiges keramisches Verbundmaterial, wobei die erste, vorwiegend lasttragende Schicht eine rein oxidische, kohlenstofffreie faserverstärkte Keramik ist, die durch ein kolloidales Verfahren hergestellt wird. Die zweite, vorwiegend thermisch isolierende Schicht ist ein oxidkeramischer Schaum.

Das bei der Herstellung der ersten Schicht angewandte kolloidale Verfahren führt zu einer kohlenstofffreien Oxidkeramik, die sich aufgrund der hohen Reinheit durch niedrigste dielektrische Verluste sowie hoher thermomechanische Beständigkeit im gesamten Einsatztemperaturbereich auszeichnet. Es wird durch dieses kolloidale Verfahren außerdem eine einfache und kostengünstige Herstellung erzielt.

Das erfindungsgemäße Verbundmaterial enthält keine glasige SiOₓC_{y}-Phase und ist aufgrund des Herstellweges absolut frei von Kohlenstoff. Es ist somit bestens als Thermalschutz und Radom zukünftiger Hochgeschwindigkeitsflugkörper oder Raumfahrzeuge geeignet.

Das erfindungsgemäße Verbundmaterial kann durch technisch vergleichsweise einfache und in ihrer Durchführung kostengünstige Verfahren hergestellt werden. Es werden Verbesserungen insofern erreicht, als zum Matrixaufbau der ersten, faserverstärkten Schicht wässrige Suspensionen mit niedriger Viskosität verwendet werden, die ökologisch vertretbar sind und eine homogene und vollständige Infiltrierung der Faserzwischenräume gewährleisten. Der Aufbau von Laminaten kann durch klassische Handlaminiertechniken, wie sie aus der Kunststoffindustrie zur Herstellung faserverstärkter Kunststoffe lange bekannt sind, erfolgen. Dazu können nicht poröse Metall- oder Kunststoffformen sowie die Vakuumsacktechnik zur Entgasung und Konsolidierung verwendet werden. Damit ist die kostengünstige Herstellung von großflächigen Leichtbaustrukturen mit komplizierter Geometrie bei niedrigen Stückzahlen, wie sie für Bauteile aus faserverstärkter Keramik typisch sind, gewährleistet. Falls höhere Stückzahlen erforderlich sind, können zur Herstellung der faserverstärkten Schicht aber auch automatisierte Laminiertechniken verwendet werden, wie sie ebenfalls in der Kunststoffindustrie üblich sind. Eine Infiltrierung von dreidimensionalen Verstärkungsarchitekturen ist ebenfalls möglich. Für die Infiltrierung und das Laminieren bei Raumtemperatur stehen ausreichend lange Verarbeitungszeiträume (ca. 6 bis 8 Stunden) zur Verfügung. Die Verfestigung des Verbunds aus Matrix und Faser erfolgt ohne organische oder polymere Hilfsstoffe und ohne Wasserentzug bei Raumtemperatur innerhalb von 24 Stunden durch eine in-situ Reaktion, die zu einem vollständigen Abbau der abstoßenden Teilchenwechselwirkungskräfte und zur Ausbildung eines defektarmen Gefüges ohne Dichtegradienten führt. Da der Matrixaufbau ohne Verwendung anorganischer Polymere oder Precursoren sowie ohne die Verwendung von temporären organischen Bindern erfolgt, ist einerseits keine Entbinderung notwendig und andererseits eine sehr hohe chemische Reinheit ohne jegliche Kohlenstoffverunreinigungen gegeben. Das anschließende Trocknen und Sintern kann freistehend an Luft durchgeführt werden. Anschließende Nachinfiltrationszyklen sind darüber hinaus nicht erforderlich.

Die zweite Schicht des erfindungsgemäßen Verbundmaterials besteht aus einem, oxidkeramischen Schaum. Es handelt sich bevorzugt um einen an sich bekannten hochporösen Schaum, vorteilhaft mit einem Volumenanteil an Poren größer als 45%, wobei es sich um offene und/oder geschlossene Poren handeln kann. Derartige Schäume können aus feinkörnigen Pulvern versetzt mit Schaumbildnern hergestellt werden. Eine Verbindung zur ersten, faserverstärkten Schicht kann über einen hochtemperaturbeständigen, oxidischen Keramikkleber erfolgen. Die beiden Schichten können fallweise aber auch mechanisch entkoppelt sein.

Je nach Frequenz und mechanische Beanspruchung ist die Dicke der ersten Schicht klein gegen die Wellenlänge oder im Bereich der halben Wellenlänge. Die Dicke der zweiten Schicht ist mindestens so hoch, dass die thermische Schutzwirkung ausreicht und wird ansonsten den elektrischen Anforderungen an die Transmission des kompletten Schichtsystems angepasst.

Die Erfindung wird nachfolgend anhand von Ausführungsbeispielen unter Bezugnahme auf Zeichnungen näher erläutert. Es zeigen:
- Fig. 1-4: verschiedene Ausführungen des erfindungsgemäßen mehrschichtigen Verbundmaterials;
- Fig. 5: ein Verfahrensschema zur Herstellung der ersten, faserverstärkten Schicht;
- Fig. 6: ein Diagramm zum Einfluss des pH-Werts auf das Zetapotential bei Zugabe eines nanoskaligen Aluminiumoxides zur Hauptkomponente Mullit bei der Herstellung der ersten, faserverstärkten Schicht;
- Fig. 7: ein Diagramm zur Änderung des Zetapotentials mit der Zeit nach Zugabe eines Aluminiumnitrid-Pulvers bei der Herstellung der ersten, faserverstärkten Schicht.

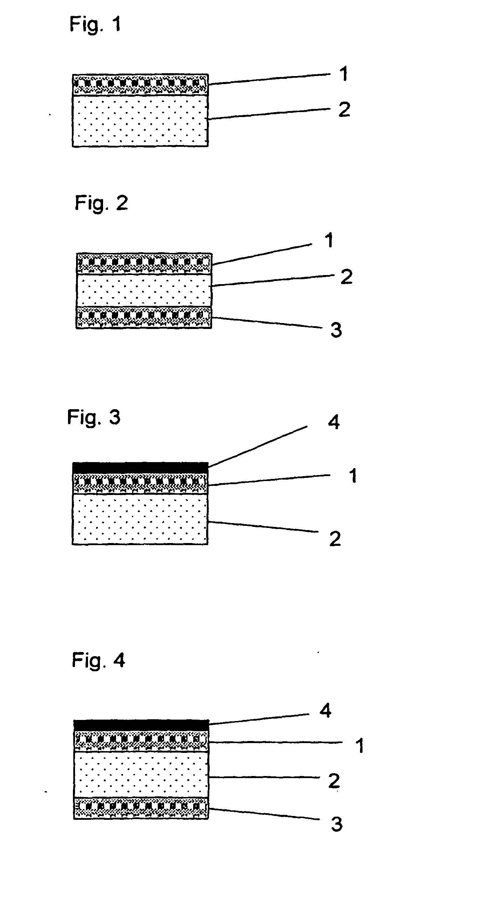

Fig. 1 zeigt den prinzipiellen Aufbau des erfindungsgemäßen mehrschichtigen Verbundmaterials. Sie umfasst eine erste Schicht 1 aus einer oxidischen, kohlenstofffreien faserverstärkten Keramik sowie als zweite Schicht eine thermische Isolationsschicht aus einem rein oxidkeramischen Schaum. Die erste Schicht 1 dient vorwiegend als lasttragende Schicht. Sie weist insbesondere eine hohe mechanische Festigkeit auf. Die zweite Schicht 2 dient insbesondere als thermische Isolationsschicht.

Als Verstärkungskomponente für die erste Schicht 1 können Faserbündel, Rovings, zweidimensionale, zweieinhalbdimensionale- oder dreidimensionale textile Faserhalbzeuge wie Gelege, Gewebe, Geflechte, Gestricke oder dergleichen verwendet werden, die aus hochfesten oxidkeramischen Vollfasern aufgebaut sind, und bevorzugt aus Mullit, Aluminiumoxid, Yttriumoxid oder einer Mischung daraus bestehen.

Die thermische Isolationsschicht 2 besteht bevorzugt aus einem hochporösem, kristallinem SiO₂ oder hochporösem Al₂O₃ oder einer Mischung daraus, wobei der Volumenanteil an Poren größer als 45% ist.

In der Ausführung nach Fig. 2 ist zur Erhöhung der Steifigkeit und/oder zur Anpassung an die elektromagnetischen Anforderungen auf die zweite Schicht 2 eine weitere Schicht 3 aufgebracht, die in ihrem Aufbau im wesentlichen dem Aufbau der ersten Schicht entspricht. Es entsteht ein Sandwich mit der zweiten Schicht 2 als mittlerer Schicht. Abhängig von Frequenz und mechanischer Beanspruchung können die Dicken von erster Schicht 1 und weiterer Schicht 3 klein gegen die Wellenlänge oder im Bereich der halben Wellenlänge sein.

Gemäß den Fig. 3 und 4 ist auf die erste Schicht 1 eine Ablationsschicht 4 aufgebracht. Im Einsatz als Radom oder als Thermalschutz von Luft- und Raumfahrzeugen bildet diese die nach außen gewandte Seite des Verbundkörpers. Die Ablationsschicht 4 kann aus einem nicht verkohlenden, ablatierenden Polymer bestehen, z.B. Polytetrafluorethylen (PTFE) oder Perfluoralkoxy (PFA)-Fluorkohlenstoff. In einer weiteren Ausführung besteht die Ablationsschicht 4 aus einer PTFE-und/oder PFA-Matrix mit elektrisch nicht leitendem Verstärkungsmaterial wie Kurzschnittfasern und/oder Flakes aus Glas oder Keramik.

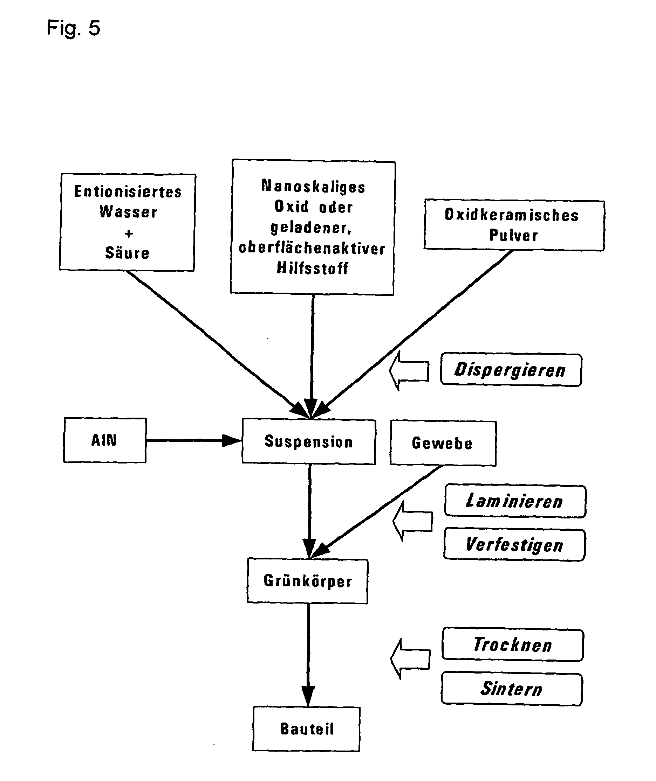

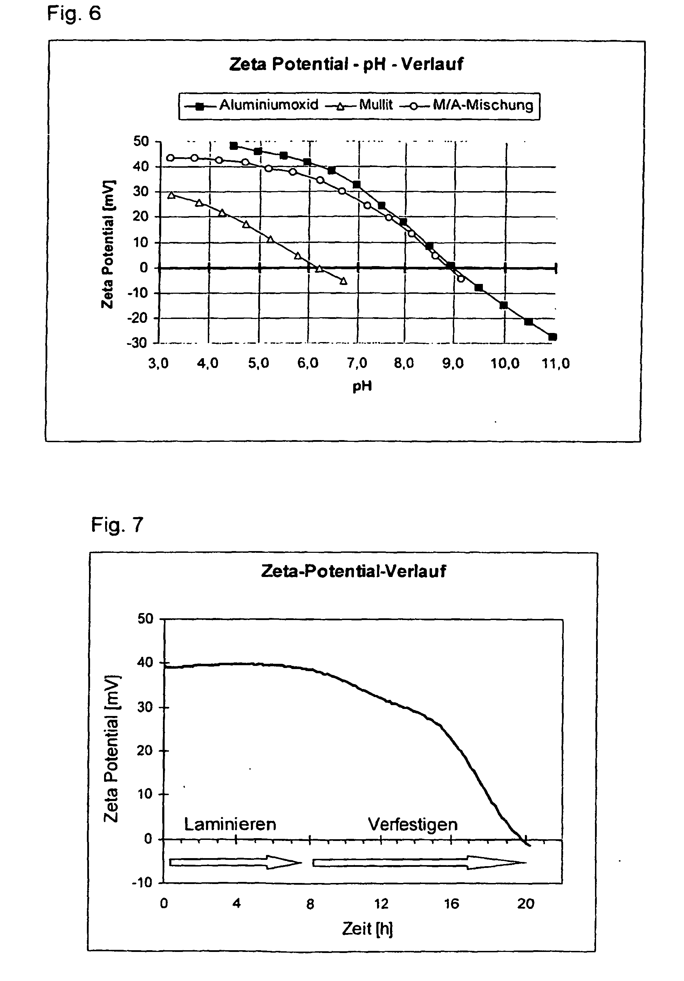

Die Herstellung der ersten, faserverstärkten Schicht des erfindungsgemäßen Verbundmaterials erfolgt bevorzugt nach folgenden Verfahrensschritten (Fig. 5):
1. Im ersten Schritt erfolgt die Herstellung einer kolloidalen, wässrigen Suspension, die den zum Matrixaufbau gewünschten Feststoff in Form eines feinteiligen, oxidkeramischen Pulvers oder einer Pulvermischung enthält. Die Zusammensetzung von Pulver oder Pulvermischung richtet sich nach dem Verwendungszweck des Verbundwerkstoffes. Hierbei sind verschiedene Materialen, wie Mullit (3Al₂O₃·2SiO₂), Aluminiumoxid, Siliziumoxid, Yttriumoxid oder Mischungen derselben möglich, wobei in dem beschriebenen Verfahren als Hauptkomponente vorrangig Mullit Anwendung findet. Die mittlere Teilchengröße der dispergierten Pulver liegt bevorzugt zwischen 200 nm und 1 µm. Der Feststoffanteil der Suspension, der sich vorrangig nach der für eine vollständige und homogene Infiltrierung der Faserzwischenräume zulässigen Viskosität richtet, liegt zwischen 40 und < 50 vol.%. Um den isoelektrischen Punkt des eingesetzten Pulvers oder der Pulvermischung erforderlichenfalls in den Bereich pH 9,0 bis 9,5 zu verschieben, wird der Suspension vorteilhaft ein nanoskaliges Oxidpulver (mittlere Teilchengröße bevorzugt kleiner 200 nm) zugegeben, dessen isoelektrischer Punkt im genannten Bereich liegt. Hierzu eignen sich beispielsweise Aluminiumoxid- oder Aluminiumhydroxid-Pulver, deren mittlere Teilchengröße unter 200 nm liegt. Die Zugabemenge kann je nach eingesetzter Pulvermischung variieren, liegt aber bei Anteilen von typischerweise 5 bis 20 wt.% an der Pulvermischung. Zur Einstellung einer möglichst niedrigen Viskosität wird der Suspension eine Säure, vorrangig HNO₃ oder HCl zugegeben, um den pH-Wert in den sauren Bereich unter pH 5 zu verschieben. Dabei kommt es an der Teilchenoberfläche der nanoskaligen Oxidpartikel zur Ausbildung einer positiven Oberflächenladung und damit verbunden einer elektrostatischen Stabilisierung, die in Form eines hohen positiven Zeta-Potentials gemessen werden kann. Obwohl das nanoskalige Oxidpulver nicht die Hauptkomponente der Pulvermischung darstellt, verhält sich die Mischung elektrochemisch praktisch wie das nanoskalige Oxidpulver alleine. Fig. 6 zeigt dies für den Fall eines nanoskaligen Aluminiumoxidpulvers. Sollte auf die Zugabe eines nanoskaligen Oxides verzichtet werden, kann die Einstellung des isoelektrischen Punktes in den Bereich pH 9,0 bis 9,5 alternativ auch durch Zugabe von geladenen, oberflächenaktiven Hilfsstoffen in Form einer kationen- oder anionenaktiven Substanz erfolgen. Hierfür eignen sich beispielsweise Polyelektrolyte oder Tenside, die in einer Menge unter 1 wt.% bezogen auf den Feststoff zugegeben werden.
2. Unmittelbar vor der Herstellung des faserverstärkten Keramikbauteiles kann der Suspension zum Zwecke der Verfestigung ein Aluminiumnitrid-Pulver in einer Menge kleiner 2 wt.% zugegeben und mittels Ultraschallbehandlung homogen verteilt werden. Die Herstellung des Laminates erfolgt anschließend bei Raumtemperatur durch beispielsweise Infiltrierung einzelner Gewebelagen, die in einem "nass-in-nass" Handlaminierverfahren, wie es aus der Kunststoffindustrie zur Herstellung faserverstärkter Kunststoffe sehr gebräuchlich ist, geschichtet werden und mittels Vakuumsacktechnik entgast und bei Drücken zwischen 0,1 und 1 bar in einer nichtporösen, verschlossenen Form verfestigt werden. Für das Infiltrieren und Laminieren stehen nach der Aluminiumnitrid-Zugabe typischerweise 6 bis 8 Stunden zur Verfügung, in denen das Zetapotential und damit verbunden auch die Viskosität praktisch unverändert bleiben. Wie aus Fig. 7 ersichtlich ist, erfolgt die Verfestigung typischerweise innerhalb von 24 Stunden bei Raumtemperatur, das heißt unterhalb der Hydrolysetemperatur des Aluminiumnitrids, die üblicherweise zwischen 50° und 70°C liegt. Während der Verfestigung wird der pH-Wert genau zum isoelektrischen Punkt zwischen pH 9,0 und pH 9,5 verschoben, wodurch das Zetapotential praktisch vollständig abgebaut wird, alle abstoßenden Teilchenwechselwirkungskräfte aufge-hoben werden und somit nur noch anziehende van-der-Waals Kräfte zwischen den Teilchen wirksam sind. Dadurch werden auch bei Verwendung von sehr niedrigviskosen Suspensionen mit nur moderaten Feststoffanteilen hohe Grünfestigkeiten im noch ungetrockneten Zustand erreicht.
3. Das nasse Grünteil wird nach der Verfestigung entformt und anschließend freistehend bei Temperaturen zwischen 20° und 95°C getrocknet.
4. Das getrocknete Grünteil wird freistehend an Luft gesintert, wobei sich die Sintertemperatur nach der jeweiligen Matrixzusammensetzung und den angestrebten Eigenschaften des Verbundwerkstoffes richtet.

Im Folgenden werden konkrete Ausführungsbeispiele zur Herstellung der ersten, lasttragenden Schicht beschrieben.

Beispiel 1: Eine saure Suspension wurde hergestellt, indem eine entsprechende Menge Mullit-Pulver und Aluminiumoxid-Pulvers in entionisiertem Wasser dispergiert wurde, wobei der pH-Wert der Suspension auf einen Wert kleiner pH 5 durch Zugabe einer 5 Molaren HNO₃-Lösung eingestellt wurde. Die Suspension wurde mittels Ultraschall deagglomeriert. Der Suspension wurden ein wenig Aluminiumnitrid-Pulver zugegeben und mittels Ultraschallbehandlung homogen dispergiert. Die dünnflüssige Suspension wurde anschließend mittels Rotationsverdampfer entgast, um eventuelle Lufteinschlüsse zu entfernen. Acht oxidische Gewebelagen mit den gewünschten Abmessungen wurden mittels naß-in-naß Handlaminiertechnik mit der Suspension infiltriert und zu einem Laminat geschichtet. Das Laminat wurde in einem Vakuumsack zwischen Metallformen luftdicht verschlossen und für eine Stunde entgast. Anschließend wurde das Laminat während der Verfestigung in der verschlossenen Form bei einem Druck zwischen 0,1 und 1 bar verpresst. Die Entformung des nassen Laminates erfolgte nach 24 Stunden. Das entformte Laminat hatte eine ausreichend hohe Grünfestigkeit und konnte anschließend freistehend getrocknet und an Luft gesintert werden. Die hergestellte endlosfaserverstärkte Keramik ist durch hohe Schadenstoleranz und sehr niedrige dielektrische Verluste charakterisiert.

Beispiel 2: Zur Herstellung einer wässrigen Vorlage wurden in einer entsprechenden Menge entionisiertem Wassers ein kationischer Polyelektrolyt gelöst. Eine saure Suspension wurde hergestellt, indem Mullit-, Aluminiumhydroxid- und Siliziumoxid-Pulver in der wässrigen Vorlage dispergiert wurden, wobei der pH-Wert der Suspension auf einen Wert kleiner pH 5 durch Zugabe einer 5 Molaren HNO₃-Lösung eingestellt wurde. Die Suspension wurde mittels Kugelmühle deagglomeriert. Der Suspension wurden eine geringe Menge Aluminiumnitrid-Pulvers zugegeben und mittels Ultraschallbehandlung homogen dispergiert. Die dünnflüssige Suspension wurde anschließend mittels Rotationsverdampfer entgast, um eventuelle Lufteinschlüsse zu entfernen. Acht oxidische Gewebelagen mit den gewünschten Abmessungen wurden mittels naß-in-naß Handlaminiertechnik mit der Suspension infiltriert und zu einem Laminat geschichtet. Das Laminat wurde in einem Vakuumsack zwischen Metallformen luftdicht verschlossen und für eine Stunde entgast. Anschließend wurde das Laminat während der Verfestigung in der verschlossenen Form bei einem Druck von 0,1 bis 1 bar verpresst. Die Entformung des nassen Laminates erfolgte nach 24 Stunden. Das entformte Laminat hatte eine ausreichend hohe Grünfestigkeit und konnte anschließend freistehend getrocknet und an Luft gesintert werden. Die hergestellte endlosfaserverstärkte Keramik ist durch hohe Schadenstoleranz und sehr niedrige dielektrische Verluste charakterisiert.

## Patentansprüche

1. Mehrschichtiges keramisches Verbundmaterial mit thermischer Schutzwirkung, **dadurch gekennzeichnet, dass** es mindestens zwei Schichten umfasst, wobei
- die erste Schicht (1) eine oxidische, kohlenstofffreie faserverstärkte Keramik ist, bestehend aus hochfesten oxidkeramischen Vollfasern mit einem Anteil von mindestens 30 vol.-% und einer oxidischen, kohlenstofffreien Matrix mit folgenden Verbundeigenschaften bei Raumtemperatur: Zugfestigkeit > 140 MPa, Wärmeleitfähigkeit < 2 W/mK, Realteil der Dielektrizitätskonstante ε' < 6 , Verlustfaktor tan δ < 0,002 ,
welche **dadurch** hergestellt ist, dass zum Matrixaufbau eine wässrige, kolloidale Suspension mit einem Feststoffanteil zwischen 40 vol.% und < 50 vol.% verwendet wird, und die Konsolidierung des Verbundes aus Matrix und Fasern in einer verschlossenen, nicht porösen Form bei Raumtemperatur unter Einwirkung von Drücken zwischen 0,1 und 1 bar erfolgt, indem das Zetapotential des Feststoffes der Suspension auf einen Wert zwischen + 5 mV und-5 mV abgebaut wird, der Verbund aus Matrix und Fasern anschließend entformt und bei Temperaturen zwischen 20°C und 95°C freistehend getrocknet und anschließend bis zur gewünschten Dichte freistehend an Luft gesintert wird,
- die zweite Schicht (2) eine thermische Isolationsschicht aus einem rein oxidischen Schaum mit folgenden Eigenschaften ist: Dichte zwischen 0,2 und 1,4 g/cm³, Wärmeleitfähigkeit < 0,25 W/mK, Realteil der Dielektrizitätskonstante ε' zwischen 1,5 und 2,5, Verlustfaktor < 0,01.

2. Keramisches Verbundmaterial nach Anspruch 1, wobei der Feststoff der Suspension für die Herstellung der ersten Schicht (1) ein oxidkeramisches Pulver, bevorzugt Mullit, Aluminiumoxid, Siliziumoxid, Yttriumoxid oder eine Mischung derselben, mit einer mittleren Teilchengröße in Dispersion kleiner 1µm ist.

3. Keramisches Verbundmaterial nach Anspruch 1 oder 2, wobei zur Ausbildung eines möglichst hohen Zetapotentials im Bereich pH < 7 und zur Einstellung des isoelektrischen Punktes im Bereich pH 9,0 bis pH 9,5 der Suspension für die Herstellung der ersten Schicht (1) ein nanoskaliges, oxidkeramisches Pulver zugegeben wird.

4. Keramisches Verbundmaterial nach Anspruch 1 oder 2, wobei zur Ausbildung eines möglichst hohen Zetapotentials im Bereich pH < 7 und zur Einstellung des isoelektrischen Punktes im Bereich pH 9,0 bis pH 9,5 der Suspension für die Herstellung der ersten Schicht (1) ein geladener, oberflächenaktiver Hilfsstoff zugegeben wird.

5. Keramisches Verbundmaterial nach Anspruch 1 oder 2, wobei für die Herstellung der ersten Schicht (1) zum Abbau des Zetapotentials der Suspension ein Metallnitridpulver zugegeben wird.

6. Keramisches Verbundmaterial nach einem der Ansprüche 1 bis 5, wobei als Verstärkungskomponente für die erste Schicht (1) Faserbündel, Rovings, zweidimensionale, zweieinhalbdimensionale- oder dreidimensionale textile Faserhalbzeuge wie Gelege, Gewebe, Geflechte, Gestricke oder dergleichen verwendet werden, die aus hochfesten oxidkeramischen Vollfasern aufgebaut sind, die bevorzugt aus Mullit, Aluminiumoxid, Yttriumoxid oder einer Mischung daraus bestehen.

7. Keramisches Verbundmaterial nach einem der Ansprüche 1 bis 6, wobei die zweite Schicht (2) aus hochporösem kristallinem SiO₂ oder hochporösem Al₂O₃ oder einer Mischung daraus besteht und der Volumenanteil an Poren größer als 45% ist.

8. Keramisches Verbundmaterial nach einem der vorangehenden Ansprüche, bei dem auf die zweite Schicht (2) eine weitere Schicht (3) aufgebracht ist, die in ihrem Aufbau im wesentlichen dem Aufbau der ersten Schicht entspricht, so daß ein Sandwich mit der zweiten Schicht (2) als mittlerer Schicht entsteht.

9. Keramisches Verbundmaterial nach einem der vorangehenden Ansprüche, **dadurch gekennzeichnet, dass** als außenliegende Schicht auf die erste Schicht (1) eine Ablationsschicht (4) aus einem nicht verkohlenden, ablatierenden Polymer aufgebracht wird.

10. Keramisches Verbundmaterial nach Anspruch 9, wobei die Ablationsschicht (4) aus Polytetrafluorethylen (PTFE) oder Perfluoralkoxy (PFA)-Fluorkohlenstoff besteht.

11. Keramisches Verbundmaterial nach Anspruch 9, wobei die Ablationsschicht (4) aus einer PTFE-und/oder PFA-Matrix mit elektrisch nicht leitendem Verstärkungsmaterial wie Kurzschnittfasern und/oder Flakes aus Glas oder Keramik besteht.

12. Keramisches Verbundmaterial nach einem der Ansprüche 1 bis 11, ausgebildet als Radom in Form einer Ogive oder eines Spitzkegels.

13. Verwendung des keramischen Verbundmaterials nach einem der vorangehenden Ansprüche im Temperaturbereich von Raumtemperatur bis 1500 °C.

14. Verwendung des keramischen Verbundmaterials nach einem der vorangehenden Ansprüche 1 bis 12 als Außenhaut von aerodynamisch aufgeheizten Bauteilen.

15. Verwendung des keramischen Verbundmaterials nach einem der Ansprüche 1 bis 12 geeignet als hitzebeständiges elektromagnetisches Fenster.

## Claims

1. Multi-layer ceramic composite material having a thermal protective effect, **characterized in that** it comprises at least two layers wherein,
- the first layer (1) is an oxidic carbon-free fibre-reinforced ceramic, comprising at least 30% by volume of high-strength oxide-ceramic full fibres, and an oxidic carbon-free matrix having composite characteristics at room temperature of a tensile strength >140 MPa, a heat conductivity <2 W/mK, a real part of a dielectric constant ε'<6, and a loss factor tan δ<0.002; and
which is prepared by using for the matrix formation an aqueous colloidal suspension having a solids fraction from 40% by volume to < 50% by volume, and the consolidation of the matrix and fibres composite taking place in a closed, non-porous mould at room temperature at pressures from 0.1 bar to 1 bar, and wherein the zeta potential of solids in the suspension is reduced to a value of between +5 mV and -5 mV, then releasing the matrix and fibres composite from the mould, and
drying the matrix and fibres composite in a free-standing manner at a temperature between 20°C and 95°C and then
sintering the matrix and fibres composite to a desired density in a free-standing manner in air,
- the second layer (2) is a thermal insulation layer comprising a purely oxidic foam having a density between 0.2 and 1.4 g/cm³, a heat conductivity < 0.25 W/mK, a real part of a dielectric constant ε' between 1.5 and 2.5 and a loss factor <0.01.

2. Ceramic composite material according to Claim 1, wherein the solids of the suspension for producing the first layer (1) comprise an oxide-ceramic powder, preferably mullite, aluminium oxide, silica, yttric oxide or a mixture thereof, having a mean particle size in a dispersion of smaller than 1 µm.

3. Ceramic composite material according to Claim 1 or 2, wherein a nanoscale oxide-ceramic powder is added to produce the highest possible zeta potential in the range of pH <7 and to adjust the isoelectric point of the suspension in the range of from pH 9.0 to pH 9.5 for producing the first layer (1).

4. Ceramic composite material according to Claim 1 or 2, wherein a charged, surface-active auxiliary agent is added to produce the highest possible zeta potential in the range of pH <7 and to adjust the isoelectric point of the suspension in the range of from pH 9.0 to pH 9.5 for producing the first layer (1).

5. Ceramic composite material according to Claim 1 or 2, wherein for producing the first layer (1) a metal nitride powder is added to reduce the zeta potential of the suspension.

6. Ceramic composite material according to any of Claims 1 to 5, wherein the reinforcing components used for the first layer (1) are fibre bundles, rovings, two-dimensional, two-and-a-half-dimensional or three-dimensional textile semifinished fibre products, such as layings, woven fabrics, interweavings, or knitted fabrics or the like, which are formed from high-strength oxide-ceramic full fibres which are preferably composed of mullite, aluminium oxide, yttric oxide, or a mixture thereof.

7. Ceramic composite material according to any of Claims 1 to 6, wherein the second layer (2) comprises highly porous, crystalline SiO₂, highly porous Al₂O₃, or a mixture thereof, and wherein the volume percent of pores is greater than 45%.

8. Ceramic composite material according to any of the preceding claims, wherein a further layer (3) is applied to the second layer (2), said third layer corresponding in construction substantially to the first layer, so that a sandwich is created with the second layer (2) as a centre layer.

9. Ceramic composite material according to any of the preceding claims, **characterized in that** an ablation layer (4) comprising a non-carbonizing ablating polymer is applied as an exterior layer to the first layer (1).

10. Ceramic composite material according to Claim 9, wherein the ablation layer (4) comprises polytetraflucroethylene (PTFE) or perfluoroalkoxy (PFA) fluorocarbon.

11. Ceramic composite material according to Claim 9, wherein the ablation layer (4) comprises a PTFE and/or PFA matrix with an electrically nonconductive reinforcing material, such as short-cut fibres and/or flakes made of glass or ceramics.

12. Ceramic composite material according to any of Claims 1 to 11, constructed as a radome in the shape of an ogive or of a pointed cone.

13. Use of the ceramic composite material according to any of the preceding claims in the temperature range of room temperature to 1,500°C.

14. Use of the ceramic composite material according to any of the preceding Claims 1 to 12 as an outer skin of aerodynamically heated components.

15. Use of the ceramic composite material according to any of Claims 1 to 12 suitable as a heat-resistant electromagnetic window.

## Revendications

1. Matériau composite céramique multicouches à action de protection thermique, **caractérisé en ce qu'**il comprend au moins deux couches,
- la première couche (1) étant une céramique, oxydée, exempte de carbone, renforcée aux fibres, constituée de fibres pleines en céramique oxydée, à haute rigidité, ayant une proportion d'au moins 30% en volume et une matrice oxydée, exempte de carbone ayant les propriétés de composite suivantes à la température ambiante: résistance à la traction > 140 MPa, conductibilité thermique < 2 W/mK, partie réelle de la constance diélectrique ε' < 6, facteur de perte tan δ < 0,002,
qui a été fabriquée **en ce que**, pour la formation de la matrice, on utilise une suspension colloïdale aqueuse ayant une proportion de substances solides comprise entre 40% en volume et < 50 % en volume, et **en ce que** la consolidation du composite de matrice et de fibres se fait dans un moule fermé, non poreux à la température ambiante sous l'action de pressions comprises entre 0,1 et 1 bar, **en ce que** le potentiel zéta de la substance solide de la suspension est diminué à une valeur comprise entre +5 mV et -5 mV, **en ce que** le composite de matrice et de fibres est ensuite déformé et est séché à l'état isolé à des températures comprises entre 20°C et 95°C et est ensuite fritté à l'état isolé à l'air jusqu'à la densité souhaitée,
- la deuxième couche (2) étant une couche d'isolation thermique faite d'une mousse oxydée pure ayant les propriétés suivantes: densité comprise entre 0,2 et 1,4 g/cm³, conductibilité thermique < 0,25 W/mK, partie réelle de la constante diélectrique ε' comprise entre 1,5 et 2,5, facteur de perte < 0,01.

2. Matériau composite céramique selon la revendication 1, la substance solide de la suspension pour la fabrication de la première couche (1) étant une poudre de céramique oxydée, de préférence, la mullite, l'oxyde d'aluminium, l'oxyde de silicium, l'oxyde d'yttrium ou un mélange de ces deniers, ayant une grandeur de particule moyenne dans la dispersion inférieure à 1 µm.

3. Matériau composite céramique selon la revendication 1 ou 2, une poudre de céramique oxydée, d'une taille à l'échelle du nanomètre, étant ajoutée en vue de la formation d'un potentiel zéta le plus élevé possible dans le domaine de pH < 7 et en vue du réglage du point isoélectrique dans le domaine de pH de 9,0 à pH de 9,5 de la suspension pour la fabrication de la première couche (1).

4. Matériau composite céramique selon la revendication 1 ou 2, un adjuvant tensioactif chargé étant ajouté en vue de la formation d'un potentiel zéta le plus élevé possible dans le domaine de pH < 7 et en vue du réglage du point isoélectrique dans le domaine de pH de 9,0 à pH de 9,5 de la suspension pour la fabrication de la première couche (1).

5. Matériau composite céramique selon la revendication 1 ou 2, une poudre de nitrure métallique étant ajoutée en vue de la fabrication de la première couche (1) en vue de la dégradation du potentiel zéta de la suspension.

6. Matériau composite céramique selon l'une quelconque des revendications 1 à 5, des faisceaux de fibres, des stratifils, des produits semi-finis textiles à deux, deux et demi ou trois dimensions, comme des toiles, des tissus, des nappes, des tricots ou des produits similaires, qui sont constitués de fibres pleines en céramique oxydée à haute résistance, qui se composent, de préférence, de mullite, d'oxyde d'aluminium, d'oxyde d'yttrium ou d'un mélange de ces derniers étant mis en oeuvre en tant que composants de renforcement pour la première couche (1).

7. Matériau composite céramique selon l'une quelconque des revendications 1 à 6, la deuxième couche (2) étant constituée de SiO₂ cristallin fortement poreux ou de Al₂O₃ fortement poreux ou d'un mélange de ces derniers et la proportion volumique en pores étant supérieure à 45%.

8. Matériau composite céramique selon l'une quelconque des revendications précédentes, dans le cas duquel on applique, sur la deuxième couche (2), une couche supplémentaire (3), qui correspond, dans sa structure, pour l'essentiel, à la structure de la première couche, de telle sorte qu'il se forme un sandwich avec la deuxième couche (2), comme couche médiane.

9. Matériau composite céramique selon l'une quelconque des revendications précédentes, **caractérisé en ce que** l'on applique, en tant que couche située à l'extérieur, sur la première couche (1), une couche d'ablation (4) faite en polymère capable d'ablation, non carbonisant.

10. Matériau composite céramique selon la revendication 9, la couche d'ablation (4) étant constituée de polytétrafluoroéthylène (PTFE) ou d'hydrocarbure fluoré perfluoroalkoxy (PFA).

11. Matériau composite céramique selon la revendication 9, la couche d'ablation (4) étant constituée d'une matrice en PTFE et/ou en PFA avec un matériau de renforcement non conducteur du point de vue électrique, comme des fibres courtes et/ou des flocons en verre ou en céramique.

12. Matériau composite céramique selon l'une quelconque des revendications 1 à 11, formé en tant que radome sous la forme d'une ogive ou d'un cône pointu.

13. Utilisation du matériau composite céramique selon l'une quelconque des revendications précédentes dans le domaine de températures allant de la température ambiante à la température de 1500°C.

14. Utilisation du matériau composite en céramique selon l'une quelconque des revendications 1 à 12 en tant que peau externe de pièces échauffées par voie aérodynamique.

15. Utilisation du matériau composite en céramique selon l'une quelconque des revendications 1 à 12, appropriée en tant que fenêtre électromagnétique résistante à la chaleur.
